# EUROPÄISCHE PATENTANMELDUNG

(11) **EP 4 768 760 A1**
(43) Veröffentlichungstag der Anmeldung: **01.07.2026**
(21) Anmeldenummer: 25224155.9
(22) Anmeldetag: 16.12.2025
(51) Int. Cl.: F16K 5/06

(54) **VENTIL MIT VERBESSERTEM DICHTUNGSELEMENT UND VERWENDUNG DES VENTILS**

(30) Priorität: 20.12.2024 DE 102024139445
(71) Anmelder: Viega Technology GmbH & Co. KG, 57439 Attendorn (DE)
(72) Erfinder: Jung, David, 57290 Neunkirchen (DE); Holz, Yannik, 57462 Olpe (DE); Stelthove, Verena, 57368 Lennestadt (DE)
(74) Vertreter: Cohausz & Florack

(57) **Zusammenfassung**

Die Erfindung betrifft ein Ventil (10, 110), insbesondere Kugelventil, mit einem Ventilgehäuse (12), das mindestens eine erste Öffnung (18) und eine zweite Öffnung (20) aufweist, zwischen denen ein Innenkanal (22) verläuft, und mit einem im Ventilgehäuse (12) angeordneten Absperrkörper (24), der zum Regulieren eines Fluidflusses durch den Innenkanal (22) verstellbar ist, wobei zwischen dem Ventilgehäuse (12) und dem Absperrkörper (24) ein Dichtungselement (50, 52) angeordnet ist und wobei das Dichtungselement (50, 52) eine elastische Dichtlippe (64) aufweist, wobei die elastische Dichtlippe (64) und der Absperrkörper (24) so ausgebildet und zueinander angeordnet sind, dass sich die elastische Dichtlippe (64) in einem Ausgangszustand befindet, wenn sich der Absperrkörper (24) in einer ersten Stellung befindet, und dass sich die elastische Dichtlippe (64) in einem gegenüber dem Ausgangszustand verformten Zustand befindet, wenn sich der Absperrkörper (24) in einer zweiten Stellung befindet. Die Erfindung betrifft weiter die Verwendung des Ventils (10) für eine Trinkwasserinstallation.

## Beschreibung

Die vorliegende Erfindung betrifft ein Ventil, insbesondere Kugelventil, mit einem Ventilgehäuse, das mindestens eine erste Öffnung und eine zweite Öffnung aufweist, zwischen denen ein Innenkanal verläuft, und mit einem im Ventilgehäuse angeordneten Absperrkörper, der zum Regulieren, insbesondere zum Absperren oder Durchlassen, eines Fluidflusses durch den Innenkanal verstellbar ist, wobei zwischen dem Ventilgehäuse und dem Absperrkörper ein Dichtungselement angeordnet ist. Die Erfindung betrifft weiter eine Verwendung des Ventils.

In Trinkwasserinstallationen werden häufig Kugelventile eingesetzt. Ein Kugelventil, das auch als Kugelhahn oder Kugelschieber bezeichnet wird, ist ein Ventil mit einem durchbohrten kugelförmigen Absperrkörper. Durch Drehen des Absperrkörpers kann das das Kugelventil geöffnet oder geschlossen werden, wobei das vollständige Schließen typischerweise lediglich eine Drehung um ca. 90° erfordert.

Bei Kugelventilen besteht das Problem, dass durch den Innenkanal des Kugelventils geleitetes Fluid in den Spalt (Totraum) zwischen Absperrkörper und Ventilgehäuse gelangen kann, was zu hygienischen Problemen führen kann, da das Fluid in dem Spalt stagniert und sich der Spalt kaum reinigen lässt. Weiterhin besteht die Möglichkeit, dass in der geschlossenen Stellung des Ventils Fluid durch den Spalt am Absperrkörper vorbei gelangen kann. Daher werden Dichtungselemente eingesetzt, um den Innenkanal im Bereich am Übergang zwischen Ventilgehäuse und Absperrkörper abzudichten.

Für derartige Dichtungselemente werden häufig Dichtmaterialien mit per- und polyfluorierte Alkylverbindungen (PFAS) eingesetzt, wie zum Beispiel Polytetrafluorethylen (PTFE). PFAS-haltige Materialen stehen jedoch in Verdacht, gesundheitsschädlich zu sein, so dass ein Bedarf besteht, den Einsatz von PFAShaltigen Materialien zu reduzieren, insbesondere im Trinkwasserbereich.

Daneben kann es bei dem Einsatz von Kugelhähnen in Trinkwasserinstallationen zu einer Verunreinigung des Dichtsitzes, d.h. dem Kontakt von Dichtungselement und Absperrkörper, kommen, insbesondere wenn das Trinkwasser in der Trinkwasserinstallation einen hohen Mineralgehalt aufweist. Die Verunreinigung am Dichtsitz kann dazu führen, dass das für die Betätigung des Kugelventils erforderliche Drehmoment stark ansteigt und ein beschädigungsfreies Betätigen des Kugelventils sogar unmöglich machen kann.

Zudem erfordern insbesondere Kugelhähne mit Dichtungselementen recht hohe Drehmomente zu deren Betätigung, d.h. zum Verstellen des Absperrkörpers. Insbesondere führen die Fließeigenschaften des Gummis bzw. Kunststoffs konventioneller Dichtungselemente, insbesondere bei hohen Einsatztemperaturen wie in Warmwasserleitungen, zu hohen Losbrechmomenten, wenn ein Kugelventil im Betrieb für längere Zeit nicht betätigt wird. Dadurch kann es zu einer Beschädigung des Dichtungselements mit der Folge von Undichtigkeiten kommen.

Weiter erfordert eine gewünschte automatische Betätigung eines Kugelventils wegen der hohen erforderlichen Drehmomente und Losbrechmomente recht große Stellantriebe, um die zur Betätigung des Kugelventils notwendigen Drehmomente aufbringen zu können, was zu höherem Bauraumbedarf und höheren Kosten führt.

Bei einem mit einem elektrischen oder hydraulischen Stellantrieb bewegten Absperrkörper können über die Nutzungszeit, zum Beispiel durch Verunreinigungen, auftretende Erhöhungen der zur Betätigung erforderlichen Drehmomente die Maximalleistung des elektrischen oder hydraulischen Systems übersteigen und so eine Drehung des Absperrkörpers verhindern. Drehmomenterhöhungen für die Betätigung können zudem zu einem vorzeitigen Verschleiß der verschiedenen Elemente des Kugelventils führen.

Vor diesem Hintergrund liegt der vorliegenden Erfindung die Aufgabe zu Grunde ein Ventil, insbesondere Kugelventil, zur Verfügung zu stellen, das zumindest einige der zuvor beschriebenen Nachteile des Stands der Technik zumindest teilweise reduziert oder vermeidet.

Insbesondere soll ein Ventil zur Verfügung gestellt werden, das besser für den Einsatz von PFAS-freien Materialien geeignet ist. So soll insbesondere ein Ventil mit einer Abdichtung vorgeschlagen werden, die eine bessere Materialauswahl ermöglicht, ohne montagetechnisch und hinsichtlich der Dichtwirkung Abstriche zum Stand der Technik zu erfordern.

Die zuvor genannte Aufgabe wird erfindungsgemäß gelöst durch ein Ventil, insbesondere Kugelventil, mit einem Ventilgehäuse, das mindestens eine erste Öffnung und eine zweite Öffnung aufweist, zwischen denen ein Innenkanal verläuft, und mit einem im Ventilgehäuse angeordneten Absperrkörper, der zum Regulieren, insbesondere zum Absperren oder Durchlassen, eines Fluidflusses durch den Innenkanal verstellbar ist, wobei zwischen dem Ventilgehäuse und dem Absperrkörper ein Dichtungselement angeordnet ist, wobei das Dichtungselement eine elastische Dichtlippe aufweist und wobei die elastische Dichtlippe und der Absperrkörper so ausgebildet und zueinander angeordnet sind, dass sich die elastische Dichtlippe in einem Ausgangszustand befindet, wenn sich der Absperrkörper in einer ersten Stellung befindet, und dass sich die elastische Dichtlippe in einem gegenüber dem Ausgangszustand verformten Zustand befindet, wenn sich der Absperrkörper in einer zweiten Stellung befindet.

Wenn sich eine Dichtlippe über eine lange Zeit, möglicherweise über Jahre, in einem verformten Zustand befindet, kann dies dazu führen, dass die Dichtlippe auch ohne äußere Krafteinwirkung in einem verformten Zustand verbleibt, so dass es beim Verstellen des Absperrkörpers in eine andere Stellung zu Undichtigkeiten kommen kann, da die Dichtlippe nicht mehr richtig abdichtet. Ein solches Verbleiben in einem verformten Zustand wird auch als Druckverformungsrest bezeichnet und tritt bei vielen Elastomeren auf. Bei einem Druckverformungsrest von 100%, was insbesondere nach sehr langer Zeit im verformten Zustand auftreten kann, verbleibt die Dichtlippe auf Dauer in der verformten Form, d.h. im zweiten Zustand. Ist die Dichtlippe sehr kurzzeitig im verformten Zustand, geht sie bei Entlastung in der Regel vollständig in den Ursprungszustand zurück (0% Druckverformungsrest). Zu Undichtigkeiten kann es bereits bei einem Druckverformungsrest unter 100% kommen, beispielsweise wenn die Dichtlippe, zum Beispiel nach einer längeren Zeit im verformten Zustand, einen Druckverformungsrest von 50% aufweist.

Bei dem zuvor beschriebenen Ventil befindet sich die Dichtlippe in der ersten Stellung des Absperrkörpers in einem Ausgangszustand, wobei die Verformung aus dem Ausgangszustand in den verformten Zustand erst beim Verstellen des Absperrkörpers von der ersten Stellung in die zweite Stellung erfolgt. Auf diese Weise kann die Dichtlippe in der zweiten Stellung zuverlässig abdichten, auch wenn der Absperrkörper erstmals nach langer Zeit verstellt wird.

Auf diese Weise kann das Ventil nach langer Stehzeit einfach betätigt werden, ohne dass es zu Undichtigkeiten oder Beschädigungen kommt. Insbesondere können auf diese Weise Losbrech- und Betätigungsmomente reduziert werden, da die Dichtlippe sich in der ersten Stellung im Ausgangszustand befindet, so dass ein Losbrechen der Dichtlippe beim Verstellen aus der ersten Stellung nicht erforderlich ist bzw. lediglich eine geringe Kraft erfordert. Dies ermöglicht insbesondere den Einsatz eines kleineren Betätigungselements, beispielsweise kleineren Hebels, oder eines kleineren Stellantriebs, insbesondere Motors, dafür. Dadurch kann das Ventil preislich, energetisch und bauraumtechnisch günstiger ausgeführt werden. Das Ventil ist insbesondere vorteilhaft bei im Betrieb unvermeidlich auftretenden Verschmutzungen, wie zum Beispiel Kalkablagerungen.

Darüber hinaus kann auf diese Weise, wenn es sich bei der ersten Stellung um eine geöffnete Stellung und bei der zweiten Stellung um eine geschlossene Stellung des Ventils handelt, ein sicheres Abdichten beim Schließen des Ventils auch nach langer Stehzeit in der ersten, geöffneten Stellung sichergestellt werden, da sich die elastische Dichtlippe in der ersten Stellung in einem Ausgangszustand befindet, vorzugsweise unbelastet ist, und auf diese Weise keinen oder lediglich einen geringfügigen Druckverformungsrest aufweist, so dass die elastische Dichtlippe beim Verstellen in die zweite, geschlossene Stellung zuverlässig abdichten kann.

Durch die Verwendung einer elastischen Dichtlippe wird ein Ablösen von etwaigen Ablagerungen an der Dichtlippe oder zwischen Dichtlippe und Absperrkörper begünstigt.

Bei dem Ventil kann es sich insbesondere um ein Kugelventil (Kugelhahn) handeln. Entsprechend kann der Absperrkörper insbesondere kugelförmig ausgebildet sein.

Das Ventil weist ein Ventilgehäuse auf, das mindestens eine erste Öffnung und eine zweite Öffnung aufweist. Es ist auch denkbar, dass das Ventilgehäuse mehr als zwei Öffnungen aufweist, beispielweise bei einem Mehrwegeventil.

Zwischen der ersten und zweiten Öffnung verläuft ein Innenkanal. Durch den Innenkanal kann insbesondere ein Fluid, beispielsweise Wasser, von der ersten Öffnung zur zweiten Öffnung oder umgekehrt geleitet werden.

Das Ventil weist weiter einen im Ventilgehäuse angeordneten Absperrkörper auf, der zum Regulieren, insbesondere zum Absperren oder Durchlassen, eines Fluidflusses durch den Innenkanal verstellbar ist. Zu diesem Zweck kann der Absperrkörper insbesondere im Innenkanal angeordnet und dazu ausgebildet sein, den Querschnitt des Innenkanals durch Verstellen des Absperrkörpers lokal zu verändern, insbesondere zu reduzieren, wodurch der Fluidfluss durch den Innenkanal reduziert werden kann. Vorzugsweise kann der Querschnitt des Innenkanals durch Verstellen des Absperrkörpers bis auf Null reduziert werden, so dass der Fluidfluss durch den Innenkanal vollständig blockiert (abgesperrt) werden kann. Der Absperrkörper kann insbesondere einen Absperrkörper-Innenkanal aufweisen, der einen Teilabschnitt des zwischen der ersten und zweiten Öffnung verlaufenden Innenkanals bildet und der gegenüber ein oder mehreren übrigen Abschnitten des Innenkanals verstellt, beispielsweise verdreht, werden kann. Durch das Verdrehen des Absperrkörper-Innenkanal gegenüber den ein oder mehreren übrigen Abschnitten des Innenkanals kann der Querschnitt des Innenkanals verändert, insbesondere reduziert werden, beispielsweise bis auf Null.

Insbesondere kann der Absperrkörper zum Absperren oder Durchlassen eines Fluidflusses durch den Innenkanal verstellbar sein, beispielsweise wenn es sich bei dem Ventil um ein Absperrventil, insbesondere Kugelventil, handelt. Der Absperrkörper kann in diesem Fall zwei vorgesehene Zielstellungen, nämlich eine geöffnete Stellung zum Durchlassen des Fluidflusses und eine geschlossene Stellung zum Absperren des Fluidflusses aufweisen. Bei der Bewegung des Absperrkörpers zwischen diesen beiden Zielstellungen kann der Absperrkörper auch Zwischenstellungen einnehmen, in denen der Fluidfluss gegenüber der geöffneten Stellung reduziert, jedoch noch nicht vollständig abgesperrt ist. Es kann vorgesehen sein, insbesondere bei einem Kugelventil, dass diese Zwischenstellungen keine regulären Betriebsstellungen darstellen, in denen das Ventil betrieben werden soll.

Entsprechend kann der Absperrkörper zwischen einer ersten und einer zweiten Zielstellung, insbesondere zwischen einer geöffneten Zielstellung und einer geschlossenen Zielstellung, des Ventils verstellbar sein. Die geöffnete Zielstellung entspricht insbesondere der Stellung, in der das Ventil maximal geöffnet ist.

Bei der ersten Stellung kann es sich insbesondere um die erste Zielstellung des Ventils und bei der zweiten Stellung kann es sich insbesondere um die zweite Zielstellung des Ventils handeln. Vorzugsweise handelt es sich bei der ersten Stellung um die geöffnete Zielstellung und bei der zweiten Stellung vorzugsweise um die geschlossene Zielstellung des Ventils.

Die elastische Dichtlippe befindet sich auf diese Weise in einem Ausgangszustand, insbesondere unbelasteten Zustand, wenn sich der Absperrkörper in der ersten Zielstellung, vorzugsweise der geöffneten Zielstellung, befindet, und in einem gegenüber dem Ausgangszustand verformten Zustand, wenn sich der Absperrkörper in der zweiten Zielstellung, vorzugsweise der geschlossenen Zielstellung, befindet.

Insbesondere kann es sich bei der geöffneten Zielstellung um eine erste Drehstellung des Absperrkörpers und bei der geschlossenen Zielstellung um eine zweite Drehstellung des Absperrkörpers handeln. Die erste und die zweite Drehstellung des Absperrkörpers können zum Beispiel um 70 - 110°, insbesondere 90°, zueinander verdreht sein.

Der Absperrkörper ist im Ventilgehäuse insbesondere derart gelagert, dass er verstellbar ist, vorzugsweise drehbar gelagert.

Zwischen dem Ventilgehäuse und dem Absperrkörper ist ein Dichtungselement angeordnet. Auf diese Weise kann der Innenkanal an einer Übergangsstelle vom Ventilgehäuse zum Absperrkörper abgedichtet werden. Insbesondere kann durch das Dichtungselement verhindert werden, dass in der ersten und/oder zweiten Stellung des Absperrkörpers Fluid, insbesondere Wasser, aus dem Innenkanal in einen Spalt zwischen Absperrkörper und Ventilgehäuse gelangt. Auf diese Weise kann insbesondere in einer geschlossenen Stellung des Absperrkörpers verhindert werden, dass Fluid durch einen Spalt zwischen Absperrkörper und Ventilgehäuse um den Absperrkörper herum gelangt.

Das Dichtungselement, das Ventilgehäuse und der Absperrkörper können so ausgebildet sein, dass ein zwischen Ventilgehäuse und Absperrkörper vorhandener Spalt in mindestens einer Stellung des Absperrkörpers, insbesondere in einer Zwischenstellung zwischen der ersten und zweiten Stellung und/oder in einer Zwischenstellung zwischen geöffneter und geschlossener Stellung durch ein durch den Innenkanal geleitetes Fluid durchströmbar ist. Zu diesem Zweck kann der Spalt in der mindestens einen Stellung des Absperrkörpers, insbesondere Zwischenstellung, beispielsweise beidseitig fluidleitend mit dem Innenkanal verbunden sein. Auf diese Weise wird erreicht, dass der Spalt zum Beispiel beim Verstellen des Ventils von der ersten in die zweite Stellung oder umgekehrt und somit zumindest sporadisch mit Fluid durchströmt wird. Dadurch kann einer Verunreinigung oder Verkeimung des Ventils durch permanent stagnierendes Wasser entgegengewirkt werden.

Das Ventilgehäuse weist vorzugsweise eine Aufnahme für das Dichtungselement auf, in der das Dichtungselement angeordnet ist. Auf diese Weise kann das Dichtungselement sicher zwischen Ventilgehäuse und Absperrkörper gehalten werden.

Vorzugsweise ist das Dichtungselement in Umfangsrichtung des Innenkanals umlaufend zwischen Ventilgehäuse und Absperrkörper angeordnet. Das Dichtungselement kann insbesondere ringförmig ausgebildet sein.

Das Dichtungselement weist eine elastische Dichtlippe auf. Die Dichtlippe erstreckt sich im Querschnitt des Dichtungselements vorzugsweise vom übrigen Dichtungselement weg, insbesondere in Richtung des Absperrkörpers und/oder in Richtung des Ventilgehäuses. Vorzugsweise verläuft die Dichtlippe in Umfangsrichtung des Innenkanals umlaufend zwischen Ventilgehäuse und Absperrkörper.

Die elastische Dichtlippe und der Absperrkörper sind so ausgebildet und zueinander angeordnet, dass sich die elastische Dichtlippe in einem Ausgangszustand befindet, wenn sich der Absperrkörper in einer ersten Stellung befindet. Bei dem Ausgangszustand kann es sich beispielsweise um einen unverformten oder um einen leicht verformten Zustand handeln. Auf diese Weise wirken in der ersten Stellung des Absperrkörpers keine oder lediglich geringe Verformungskräfte auf die Dichtlippe, so dass eine bleibende Verformung der Dichtlippe, beispielsweise wenn sich der Absperrkörper über einen langen Zeitraum in der ersten Stellung befindet, reduziert oder vermieden wird.

Bei der ersten Stellung des Absperrkörpers handelt es sich vorzugsweise um eine geöffnete Stellung des Ventils, in der der Absperrkörper den Querschnitt des Innenkanals nicht oder nur geringfügig reduziert. Bei der ersten Stellung des Absperrkörpers kann es sich aber auch um eine teilgeöffnete Stellung handeln, in der der Absperrkörper den Querschnitt des Innenkanals stärker reduziert, oder um eine geschlossene Stellung des Ventils, in der der Absperrkörper den Querschnitt des Innenkanals auf Null reduziert, d.h. den Innenkanal vollständig sperrt.

Die elastische Dichtlippe und der Absperrkörper sind weiter so ausgebildet und zueinander angeordnet, dass sich die elastische Dichtlippe in einem gegenüber dem Ausgangszustand verformten Zustand befindet, wenn sich der Absperrkörper in einer zweiten Stellung befindet. In der zweiten Stellung bewirkt die Dichtlippe insbesondere eine Abdichtung zum Absperrkörper und/oder zum Ventilgehäuse, insbesondere zwischen dem Innenkanal und einem etwaigen Spalt zwischen Absperrkörper und Ventilgehäuse.

Die Dichtlippe wird demnach insbesondere beim Verstellen des Absperrkörpers von der ersten Stellung in die zweite Stellung aus dem Ausgangszustand in den verformten Zustand verformt, insbesondere indem die Dichtlippe gegen den Absperrkörper oder das Ventilgehäuse gedrückt wird. Die Elastizität der Dichtlippe bewirkt bei der Verformung aus dem Ausgangszustand insbesondere eine der Verformung entgegenwirkende Kraft, durch die Dichtlippe insbesondere an den Absperrkörper oder das Ventilgehäuse gedrückt wird, wodurch eine gute Abdichtung erzielt wird.

Vorzugsweise ist die Dichtlippe derart ausgebildet und angeordnet, dass die Dichtlippe in der zweiten Stellung einen konkav geformten Bereich zum Innenkanal ausbildet, insbesondere in einem der Kontaktfläche der Dichtlippe zum Absperrkörper und/oder Ventilgehäuse, d.h. dem Dichtsitz, gegenüberliegenden Bereich. Auf diese Weise führt der Druck eines im Innenkanal vorhandenen oder diesen durchströmenden Fluids auf die Dichtlippe im konkav geformten Bereich zu einer Erhöhung des Anpressdrucks der Dichtlippe zum Absperrkörper und/oder Ventilgehäuse. Dadurch kann eine bessere Abdichtung erreicht werden.

Bei der zweiten Stellung des Absperrkörpers handelt es sich vorzugsweise um eine geschlossene Stellung des Ventils, in der der Absperrkörper den Querschnitt des Innenkanals auf Null reduziert, d.h. den Innenkanal vollständig sperrt. Bei der zweiten Stellung des Absperrköpers kann es sich aber auch um eine teilgeöffnete oder geöffnete Stellung des Ventils handeln.

Die Aufgabe wird erfindungsgemäß weiterhin gelöst durch die Verwendung des zuvor beschriebenen Ventils oder einer Ausführungsform davon für eine Gasinstallation oder Trinkwasserinstallation.

Im Folgenden werden verschiedene Ausführungsformen des Ventils und der Verwendung beschrieben, wobei die einzelnen Ausführungsformen jeweils unabhängig voneinander für das Ventil und die Verwendung gelten. Darüber hinaus können die einzelnen Ausführungsformen beliebig miteinander kombiniert werden.

Bei einer Ausführungsform liegt die elastische Dichtlippe in dem verformten Zustand, vorzugsweise unter Vorspannung, am Absperrkörper oder am Ventilgehäuse, vorzugsweise am Absperrkörper, an. Wenn die Dichtlippe beim Verstellen des Absperrkörpers in die zweite Stellung durch Kontakt mit dem Absperrkörper oder dem Ventilgehäuse verformt wird, bewirkt dies eine der Verformung entgegenwirkende Gegenkraft, so dass die elastische Dichtlippe in der zweiten Stellung des Absperrkörpers unter Vorspannung am Absperrkörper bzw. am Ventilgehäuse anliegt. Auf diese Weise wird eine gute Abdichtung zum Absperrkörper bzw. zum Ventilgehäuse erreicht. Wenn die Dichtlippe im verformten Zustand am Absperrkörper anliegt, sind die Dichtlippen und der Absperrkörper in der ersten Stellung des Absperrkörpers vorzugsweise zueinander beabstandet. Wenn die Dichtlippe im verformten Zustand am Ventilgehäuse anliegt, sind die Dichtlippe und das Ventilgehäuse in der ersten Stellung des Absperrkörpers vorzugsweise zueinander beabstandet.

Bei einer Ausführungsform weist das Dichtungselement eine weitere elastische Dichtlippe auf, wobei die weitere elastische Dichtlippe und der Absperrkörper so ausgebildet und zueinander angeordnet sind, dass die weitere elastische Dichtlippe, vorzugsweise unter Vorspannung, am Absperrkörper oder Ventilgehäuse, vorzugsweise am Absperrkörper, anliegt, wenn sich der Absperrkörper in der ersten Stellung befindet. Die weitere Dichtlippe kann beispielsweise dazu dienen, den Absperrkörper in der ersten Stellung in Position zu halten. Zusätzlich oder alternativ kann mit der weiteren Dichtlippe eine Abdichtung in der ersten Stellung des Absperrkörpers erreicht werden.

Mit der elastischen Dichtlippe und der weiteren elastischen Dichtlippe weist das Dichtungselement gemäß dieser Ausführungsform demnach zwei Dichtlippen auf, von denen vorzugsweise in der ersten und zweiten Stellung, weiter bevorzugt auch in einer Zwischenstellung zwischen der ersten und zweiten Stellung, insbesondere in jeder Stellung des Absperrkörpers, mindestens jeweils eine in Eingriff ist, d.h. am Absperrkörper und/oder am Ventilkörper anliegt. Auf diese Weise kann der Absperrkörper, insbesondere ein kugelförmiger Absperrkörper, in der ersten und zweiten Stellung, vorzugsweise auch in Zwischenstellungen, in Position gehalten werden.

Es ist denkbar, dass sich die weitere Dichtlippe in der zweiten Stellung des Absperrkörpers in einem Ausgangszustand mit einer geringeren Verformung oder keiner Verformung gegenüber dem Zustand der weiteren Dichtlippe in der ersten Stellung des Absperrkörpers befindet. Auf diese Weise können sich die Dichtlippe und die weitere Dichtlippe in ihrer jeweiligen Abdichtwirkung beim Verstellen des Absperrkörpers zwischen der ersten und der zweiten Stellung abwechseln, so dass sowohl beim Verstellen in die erste Stellung als auch beim Verstellen in die zweite Stellung eine Verformung einer jeweiligen Dichtlippe aus einem jeweiligen Ausgangszustand erfolgt und dadurch in beiden Stellungen jeweils eine gute Abdichtung erreicht werden kann.

Weiterhin ist es denkbar, dass die weitere Dichtlippe sowohl in der ersten Stellung als auch in der zweiten Stellung am Absperrkörper oder am Ventilgehäuse anliegt, vorzugsweise unter Vorspannung. Auf diese Weise kann die weitere Dichtlippe zum Beispiel dazu dienen, den Absperrkörper in der ersten und zweiten Stellung in Position zu halten und ggf. zu lagern, insbesondere wenn der Absperrkörper kugelförmig ist. Bei dieser Ausgestaltung liegt in der ersten Stellung, insbesondere geöffneten Stellung, des Absperrkörpers vorzugsweise mindestens die weitere Dichtlippe am Absperrkörper und/oder Ventilgehäuse, vorzugsweise am Absperrkörper, an und in der zweiten Stellung, insbesondere geschlossenen Stellung, des Absperrkörpers liegen vorzugsweise die die Dichtlippe und die weitere Dichtlippe am Absperrkörper und/oder Ventilgehäuse, vorzugsweise am Absperrkörper, an.

Bei einer Ausführungsform weist das Dichtungselement ein oder mehrere Öffnungen als Bypass für die weitere elastische Dichtlippe auf. Insbesondere kann das Dichtungselement ein oder mehrere Kanäle oder Perforationen aufweisen. Die ein oder mehreren Öffnungen dienen als Bypass für die weitere elastische Dichtlippe. Auf diese Weise bewirken die ein oder mehreren Öffnungen eine Fluidverbindung zwischen dem Innenkanal und einem zwischen dem Ventilgehäuse und dem Absperrkörper vorhandenen Spalt, wenn in der ersten Stellung lediglich die weitere elastische Dichtlippe am Absperrköper und/oder Ventilgehäuse anliegt. Dadurch wird erreicht, dass der Spalt zwischen Ventilgehäuse und Absperrkörper in der ersten Stellung, vorzugsweise geöffneten Stellung, mit durch den Innenkanal fließendem Fluid durchströmt wird, wodurch in der ersten Stellung stagnierendes Fluid, insbesondere Wasser, im Spalt vermieden werden kann. Auf diese Weise kann eine Verunreinigung oder Verkeimung des Spalts vermieden werden.

Bei einer Ausführungsform ist der Absperrkörper drehbar im Ventilgehäuse gelagert, insbesondere um eine Drehachse, wobei der Absperrkörper vorzugsweise einen Absperrkörper-Innenkanal aufweist. Der Absperrkörper kann insbesondere kugelförmig ausgebildet sein. Bei dem Ventil kann es sich entsprechend um ein Kugelventil handeln. Entsprechend kann es sich bei der ersten Stellung des Absperrkörpers um eine erste Drehstellung und bei der zweiten Stellung des Absperrkörpers um eine zweite Drehstellung handeln.

Ein drehbarer Absperrkörper erlaubt insbesondere eine kontinuierliche Regulierung des Fluidflusses, insbesondere zwischen einer geöffneten und einer geschlossenen Stellung des Ventils. Der Absperrkörper-Innenkanal wird beim Drehen des Absperrkörper insbesondere zu den ein oder mehreren übrigen Abschnitten des Innenkanals verdreht, wodurch der Querschnitt des Innenkanals reduziert werden kann, insbesondere bis auf Null in der geschlossenen Stellung des Ventils.

In der ersten Stellung, bei der es sich vorzugsweise um der geöffneten Zielstellung des Ventils handelt, sind der Absperrkörper-Innenkanal und die übrigen Abschnitte des Innenkanals vorzugsweise zueinander ausgerichtet, insbesondere derart, dass die Mittelachse des Absperrkörper-Innenkanals parallel zur Mittelachse der an den Absperrkörper-Innenkanal anschließenden Abschnitte des Innenkanals ausgerichtet ist. In der zweiten Stellung, bei der es sich vorzugsweise um die geschlossene Zielstellung des Ventils handelt, sind der Absperrkörper-Innenkanal und die übrigen Abschnitte des Innenkanals vorzugsweise zueinander verdreht.

Bei einer Ausführungsform ist das Dichtungselement ringförmig. Auf diese Weise kann das Dichtungselement den Innenkanal im Bereich zwischen Ventilgehäuse und Absperrkörper über den gesamten Umfang des Innenkanals abdichten. Ein ringförmiges Dichtungselement ist insbesondere für einen kugelförmigen Absperrkörper geeignet. Das Ventilgehäuse weist vorzugsweise eine in Umfangsrichtung des Innenkanals umlaufende Aufnahme zur Aufnahme des ringförmigen Dichtungselements auf. Auf diese Weise kann das ringförmige Dichtungselement über den gesamten Umfang sicher zwischen Ventilgehäuse und Absperrkörper gehalten werden.

Im Ausgangszustand ist das Dichtungselement insbesondere über den gesamten Umfang weniger verformt als im verformten Zustand, insbesondere unverformt. Vorzugsweise ist das Dichtungselement im Ausgangszustand über den gesamten Umfang unbelastet.

Bei einer Ausführungsform weist das Dichtungselement einen Trägerkörper aus einem ersten Material und einen Dichtkörper aus einem zweiten Material auf, wobei das zweite Material ein geringeres Elastizitätsmodul aufweist als das erste Material.

Auf diese Weise kann durch den Trägerkörper mit höherem Elastizitätsmodul und damit höherer Steifigkeit eine ausreichende Stabilität des Dichtungselements bewirkt werden, sodass das Dichtungselement beim Verstellen des Absperrkörpers bzw. durch den Druck eines durch den Innenkanal fließenden Fluids nicht aus der vorgesehenen Position zwischen Ventilgehäuse und Absperrkörper gedrückt wird.

Weiter wird durch den Dichtkörper mit dem geringeren Elastizitätsmodul und damit geringerer Steifigkeit eine ausreichende Elastizität des Dichtungselements bereitgestellt, um eine gute Abdichtung zwischen Dichtungselement und Absperrkörper und/oder Ventilgehäuse erreichen zu können.

Vorzugsweise bildet der Dichtkörper die Dichtlippe und/oder die weitere Dichtlippe. Auf diese Weise wird eine bessere Abdichtung zwischen Dichtlippe bzw. weiterer Dichtlippe und Absperrkörper bzw. Ventilgehäuse erreicht.

Durch die Aufteilung der tragenden und abdichtenden Funktion des Dichtungselements auf zwei Elemente des Dichtungselements, nämlich auf den Trägerkörper und den Dichtkörper, kann die Materialauswahl des Trägerkörpers und des Dichtkörpers für die jeweilige Funktion optimiert werden. Insbesondere müssen die eingesetzten Materialien nicht notwendigerweise mehr sowohl tragende als auch abdichtende Eigenschaften aufweisen, wodurch sich die denkbare Materialpalette erweitert.

Darüber hinaus führt der Dichtkörper mit dem weniger steifen Material dazu, dass sich bei der Bildung von Ablagerungen diese Ablagerungen, insbesondere im Vergleich zu herkömmlichen Dichtungselementen aus PTFE bzw. PFAS-haltigem Material erheblich leichter ablösen lassen, da sich der Dichtwerkstoff des Dichtkörpers insbesondere deutlich stärker elastisch verformen lässt.

Weiterhin erlaubt das weniger steife Material des Dichtkörpers eine gute Abdichtung auch bei größeren Toleranzen, insbesondere des Abstands zwischen Absperrkörper und Ventilgehäuse, wodurch ein besserer Toleranzausgleich im Ventil ermöglicht wird. Auf diese Weise können die Qualität des Ventils gesteigert und der Produktionsausschuss, zum Beispiel wegen größerer Toleranzen, reduziert werden.

Weiter hat die Ausbildung des Dichtungselements mit Tragkörper und Dichtkörper positive Auswirkungen auf die Betätigung des Ventils, da durch die mechanischen Eigenschaften insbesondere des für den Dichtkörper verwendeten Werkstoffs bei hoher Abdichtleistung trotzdem lediglich recht geringe Drehmomente zum Betätigen notwendig sind.

Der Trägerkörper und der Dichtkörper können insbesondere form- und/oder stoffschlüssig miteinander verbunden sein. Beispielsweise kann das Dichtungselement mittels Mehrkomponenten-Spritzgießen hergestellt werden, wodurch eine stoffschlüssige Verbindung zwischen Trägerkörper und Dichtkörper bewirkt wird. Weiterhin kann der Trägerkörper ein oder mehrere Öffnungen, insbesondere in Umfangsrichtung verteilte Öffnungen, aufweisen, durch die sich das Material des Dichtkörpers erstreckt. Auf diese Weise kann eine formschlüssige Verbindung zwischen Trägerkörper und Dichtkörper bewirkt werden.

Der Dichtkörper umgibt den Trägerkörper vorzugsweise auf zwei gegenüberliegenden Seiten, so dass der Dichtkörper sowohl zum Absperrkörper als auch zum Ventilgehäuse abdichten kann.

Bei einer Ausführungsform ist das Dichtungselement PFAS-frei. Per- und polyfluorierte Alkylverbindungen (PFAS) stehen im Verdacht, krebserregend zu sein, so dass ein Bedarf besteht, auf diese Materialien zu verzichten und stattdessen PFAS-freie Materialien einzusetzen, insbesondere bei Verwendung des Ventils für eine Trinkwasserinstallation.

PFAS wird jedoch aktuell noch häufig für Dichtungselemente eingesetzt, da es sowohl tragende als auch abdichtende Eigenschaften aufweist. Insbesondere bei Verwendung eines Dichtungselements mit Trägerkörper und Dichtkörper kann bei dem vorliegenden Ventil auf PFAS-haltige Materialien verzichtet und es können stattdessen PFAS-freie Materialien eingesetzt werden, die für den Trägerkörper tragende und für den Dichtkörper abdichtende Eigenschaften aufweisen.

Entsprechend ist insbesondere das zweite Material, vorzugsweise sind das erste Material und das zweite Material PFAS-frei.

Der Trägerkörper kann insbesondere aus vorzugsweise faserverstärktem, insbesondere Glasfaser- oder Kohlefaser-verstärktem, Kunststoff bestehen. Bei dem Kunststoff des Trägerkörpers kann es sich insbesondere um einen Polyphthalamidbasierten Kunststoff (PPA-Kunststoff) oder um einen Polyphenylensulfid-basierten Kunststoff (PPS-Kunststoff) handeln.

Der Dichtkörper umfasst insbesondere ein Elastomer oder besteht daraus. Bei dem Elastomer kann es sich insbesondere um einen Synthesekautschuk handeln, beispielsweise um Ethylen-Propylen-Dien-Kautschuk (EPDM) oder um Acrylnitrilbutadien-Kautschuk (NBR), insbesondere um hydrierten Acrylnitrilbutadien-Kautschuk (HNBR). EPDM wird vorzugsweise für Trinkwasseranwendungen verwendet. NBR bzw. HNBR wird vorzugsweise bei Gasanwendungen verwendet. Diese Synthesekautschuke sind insbesondere PFAS-frei und erlauben damit die Herstellung eines PFAS-freien Ventils.

Grundsätzlich ist es auch denkbar, einen PFAS-haltiges Elastomer für den Dichtkörper zu verwenden, beispielsweise Fluorkarbon-Kautschuk (FKM). In diesem Fall wäre das Ventil jedoch nicht PFAS-frei.

Bei einer Ausführungsform weist das Dichtungselement ein oder mehrere der Dichtlippe und/oder der weiteren Dichtlippe gegenüberliegende Dichtflächen auf, die am Ventilgehäuse oder am Absperrkörper anliegen. Ist die Dichtlippe in der zweiten Stellung des Absperrkörpers zur Anlage am Absperrkörper vorgesehen, so liegen die ein oder mehreren Dichtflächen vorzugsweise am Ventilgehäuse an. Ist die Dichtlippe in der zweiten Stellung des Absperrkörpers zur Anlage am Ventilgehäuse vorgesehen, so liegen die ein oder mehreren Dichtflächen vorzugsweise am Absperrkörper an.

Eine Dichtfläche kann insbesondere durch einen hervorstehenden Bereich des Dichtkörpers gebildet werden, beispielsweise auch durch eine Dichtlippe.

Die Dichtflächen bilden ein Gegenlager für die Anlage der Dichtlippe an den Absperrkörper bzw. das Ventilgehäuse. Weiter führen die Dichtflächen zu einer Abdichtung zum Ventilgehäuse, wenn die Dichtlippe zum Absperrkörper abdichtet, bzw. zum Absperrkörper, wenn die Dichtlippe zum Ventilgehäuse abdichtet.

In der ersten Stellung des Absperrkörpers, vorzugsweise in der geöffneten Stellung des Ventils, liegen vorzugsweise auf der einen Seite des Dichtungselements die ein oder mehreren Dichtflächen an jeweiligen Gegenflächen am Ventilgehäuse bzw. am Absperrkörper und auf der anderen Seite des Dichtungselements vorzugsweise die weitere Dichtlippe am Absperrkörper bzw. am Ventilgehäuse unter Vorspannung an und dichten auf diese Weise gemeinsam zum Ventilgehäuse und zum Absperrkörper ab.

Beim Verstellen des Absperrkörpers in die zweite Stellung, vorzugsweise in die geschlossene Stellung des Ventils, liegen vorzugsweise auf der einen Seite des Dichtungselements die ein oder mehreren Dichtflächen an den Gegenflächen am Ventilgehäuse bzw. am Absperrkörper und auf der anderen Seite des Dichtungselements die Dichtlippe und bevorzugt zudem die weitere Dichtlippe am Absperrkörper bzw. am Ventilgehäuse unter Vorspannung an und dichten auf diese Weise gemeinsam zum Ventilgehäuse und zum Absperrkörper ab.

Bei einer Ausführungsform ist zwischen dem Ventilgehäuse und dem Absperrkörper ein weiteres Dichtungselement angeordnet, wobei eines von dem Dichtungselement und dem weiteren Dichtungselement zwischen dem Absperrkörper und einem der ersten Öffnung zugewandten Teil des Ventilgehäuses und das andere von dem Dichtungselement und dem weiteren Dichtungselement zwischen dem Absperrkörper und einem der zweiten Öffnung zugewandten Teil des Ventilgehäuses angeordnet ist. Entsprechend ist vorzugsweise beidseitig des Absperrkörpers ein jeweiliges Dichtungselement zum Abdichten zwischen Absperrkörper und Ventilgehäuse vorgesehen. Das weitere Dichtungselement kann wie das Dichtungselement ausgebildet sein.

Bei einer Ausführungsform weist das Ventilgehäuse einen ersten Anschlussstutzen mit der ersten Öffnung und einen zweiten Anschlussstutzen mit der zweiten Öffnung auf. Auf diese Weise kann das Ventil an weitere Komponenten, insbesondere einer Trinkwasseranlage, angeschlossen werden. Zu diesem Zweck kann der erste und/oder zweite Anschlussstutzen beispielsweise ein Gewinde, eine Presskontur oder einen Flansch aufweisen.

Bei einer Ausführungsform ist ein Betätigungselement zum Verstellen des Absperrkörpers vorgesehen. Das Bestätigungselement ist vorzugsweise aus dem Ventilgehäuse herausgeführt, so dass es von außen bedient werden kann. Bei dem Betätigungselement kann es sich zum Beispiel um eine Welle mit einem Hebel handeln, über die der Absperrkörper um eine Drehachse gedreht werden kann.

Vorzugsweise ist ein Stellantrieb, insbesondere ein Motor, zum automatischen Verstellen des Absperrkörpers vorgesehen.

Bei dem beschriebenen Ventil sind die Betätigungsmomente und Losbrechmomente reduziert, so dass deutlich kleinere Stellantriebe mit geringerer Maximalleistung eingesetzt werden können, wodurch der Bauraum, die Kosten sowie die notwendige zu erbringende Leistung und der daraus resultierende Stromverbrauch erheblich reduziert werden können.

Weitere Merkmale und Vorteile des Ventils und der Verwendung ergeben sich aus der nachfolgenden Beschreibung von Ausführungsbeispielen, wobei auf die beigefügte Zeichnung Bezug genommen wird.

In der Zeichnung zeigen
- Fig. 1a-b: ein Ausführungsbeispiel des Ventils in geöffneter Stellung,
- Fig. 2a-b: das Ventil aus Fig. 1a-b in geschlossener Stellung,
- Fig. 3a-b: eines der Dichtungselemente des Ventils aus Fig. 1a-b,
- Fig. 4: das Ventil aus Fig. 1a-b in einer Zwischenstellung und
- Fig. 5: ein weiteres Ausführungsbeispiel des Ventils.

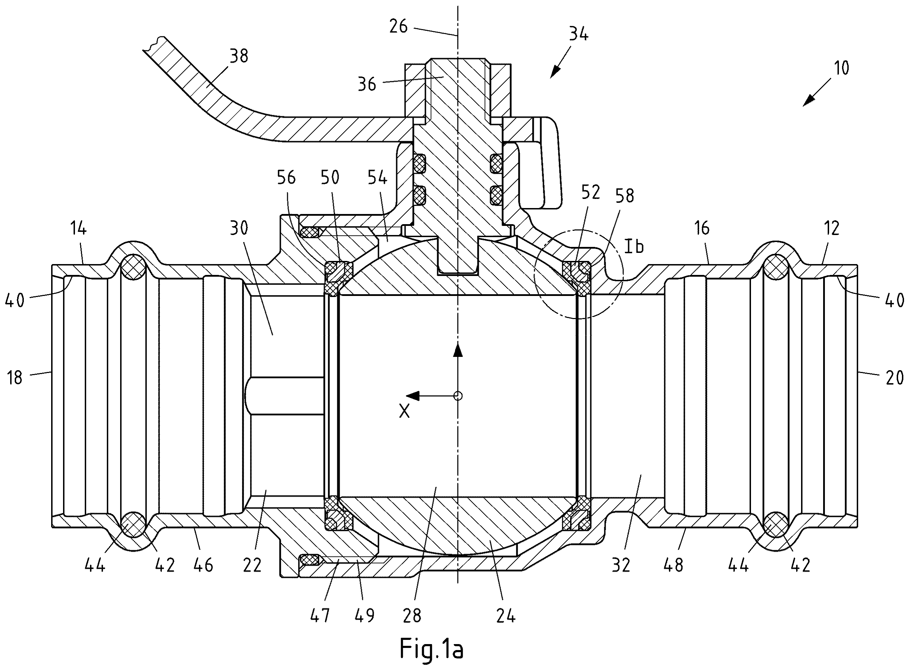

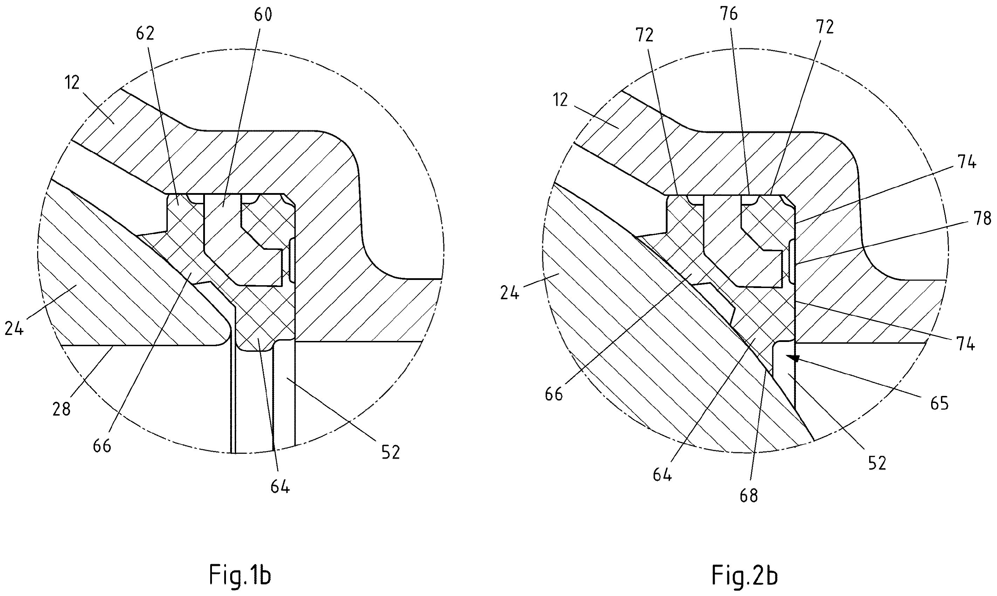

Die Fig. 1a-b zeigen ein Ausführungsbeispiel des Ventils in schematischer Ansicht, wobei Fig. 1a eine Schnittdarstellung und Fig. 1b einen Ausschnitt aus Fig. 1b entsprechend des in Fig. 1a mit "Ib" markierten Bereichs zeigt.

Das Ventil 10 ist als Kugelventil ausgebildet und weist ein Ventilgehäuse 12 mit einem ersten Anschlussstutzen 14 und einem zweiten Anschlussstutzen 16 auf. An dem ersten Anschlussstutzen 14 ist eine erste Öffnung 18 und an dem zweiten Anschlussstutzen 16 ist eine zweite Öffnung 20 vorgesehen. Zwischen der ersten Öffnung 18 und der zweiten Öffnung 20 verläuft ein Innenkanal 22 in axialer Richtung des Ventils 10.

In dem Ventilgehäuse 12 ist ein kugelförmiger Absperrkörper 24 angeordnet, der zum Regulieren eines Fluidflusses durch den Innenkanal 22 verstellbar, nämlich um eine Drehachse 26 drehbar, ist. Zu diesem Zweck weist der Absperrkörper 24 einen Absperrkörper-Innenkanal 28 auf, der einen Abschnitt des Innenkanals 22 bildet und zu den übrigen Innenkanal-Abschnitten 30, 32 des Innenkanals 22 im Bereich des ersten und zweiten Anschlussstutzens 14, 16 verdreht werden kann. In Fig. 1a ist der Absperrkörper-Innenkanal 28 zu den Innenkanal-Abschnitten 30, 32 ausgerichtet, so dass der Querschnitt des Innenkanals 22 durch den Absperrkörper-Innenkanal 28 nicht reduziert bzw. versperrt und das Ventil 10 entsprechend geöffnet ist.

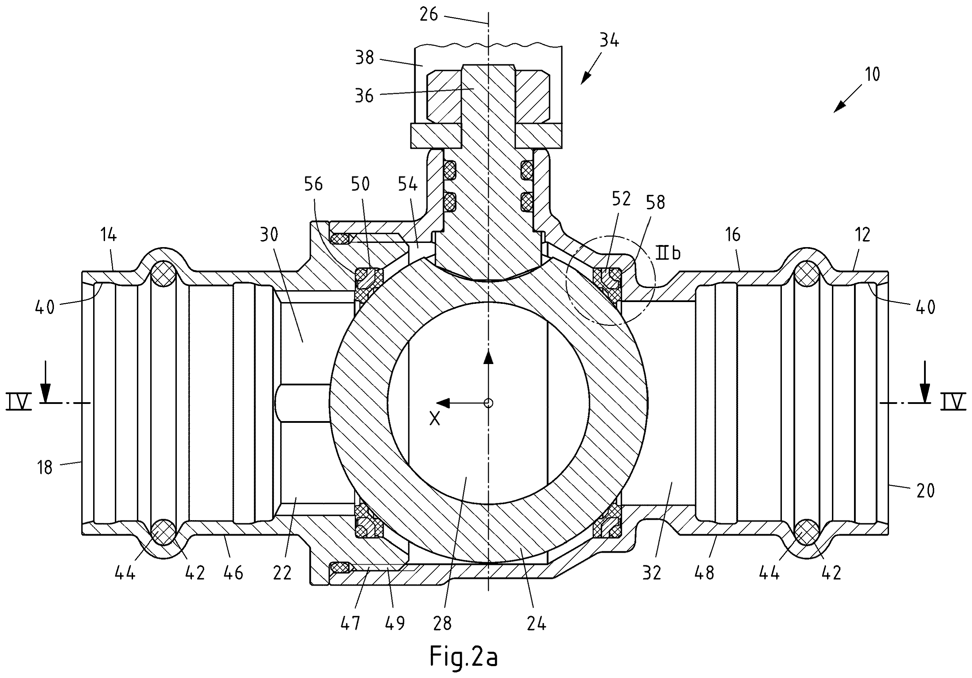

Die Fig. 2a-b zeigen das Ventil 10 mit gegenüber Fig. 1a-b um 90° gedrehtem Absperrkörper 24. Der Absperrkörper-Innenkanal 28 ist dadurch gegenüber den Innenkanal-Abschnitten 30, 32 soweit verdreht, dass der Querschnitt des Innenkanals 22 auf Null reduziert ist, d.h. das Ventil 10 vollständig geschlossen ist. Fig. 2a zeigt eine der Fig. 1a entsprechende Schnittansicht und Fig. 2b einen dem in Fig. 2a mit "IIb" bezeichneten Bereich entsprechenden Ausschnitt der Fig. 2a.

Die Fig. 1a-b zeigt demnach eine erste Zielstellung (geöffnete Stellung) und Fig. 2a-b eine zweite Zielstellung (geschlossene Stellung) des Ventils 10. Beim Verstellen von einer in die andere Zielstellung kann der Absperrkörper 24 grundsätzlich auch Zwischenstellungen zwischen der geöffneten Stellung (Fig. 1a-b) und der geschlossenen Stellung (Fig. 2a-b) einnehmen, in denen der Querschnitt des Innenkanals 22 auf einen jeweiligen Zwischenwert zwischen dem vollen Querschnitt und Null reduziert ist. Typischerweise werden Kugelventile wie das Ventil 10 jedoch nicht auf Dauer in solchen Zwischenstellungen betrieben, sondern lediglich in den beiden Zielstellungen. Die Zwischenstellungen werden dann lediglich kurzzeitig beim Verstellen von der einen in die andere Zielstellung eingenommen.

Zum Verstellen des Absperrkörpers 24 ist ein Betätigungselement 34 mit einer mit dem Absperrkörper 24 drehfest verbundenen Welle 36 und einem damit drehfest verbundenen Hebel 38 vorgesehen. Die Welle 36 ist zum Ventilgehäuse 12 abgedichtet, beispielsweise wie in Fig. 1a-b gezeigt mittels O-Ringen.

Der erste und der zweite Anschlussstutzen 14, 16 weisen im vorliegenden Beispiel jeweils eine Pressinnenkontur 40 sowie ein in einer Nut 42 angeordnetes Dichtungselement 44 in Form eines O-Rings auf. Auf diese Weise kann das Ventil am ersten und zweiten Anschlussstutzen 14, 16 mit einer jeweiligen Rohrleitung, zum Beispiel eines Trinkwassersystems, verbunden werden, indem ein jeweiliges Rohrende der entsprechende Rohrleitung in die jeweilige Öffnung 18, 20 eingeführt und dort mit dem jeweiligen Anschlussstutzen 14, 16 verpresst wird. Alternativ können die Anschlussstutzen 14, 16 auch für eine Schraubverbindung, zum Beispiel durch Vorsehen eines Innen- oder Außengewindes, ausgebildet sein oder einen Flansch aufweisen.

Das Ventilgehäuse 12 ist im vorliegenden Beispiel zweiteilig ausgebildet mit einem ersten Gehäuseteil 46, das den ersten Anschlussstutzen 14 bildet, und einem zweiten Gehäuseteil 48, das den zweiten Anschlussstutzen 16 bildet. Das erste und zweite Gehäuseteil 46, 48 sind über korrespondierende Gewinde 47, 49 miteinander verschraubt. Die zweiteilige Ausbildung des Ventilgehäuses 12 erleichtert die Montage der einzelnen Teile des Ventils 10 zum Ventil 10. Insbesondere kann auf diese Weise bei der Montage der Absperrkörper 24 in das zweite Gehäuseteil 48 eingesetzt werden, bevor das erste Gehäuseteile 46 in das zweite Gehäuseteil 48 eingeschraubt wird.

Zur Abdichtung des Ventilgehäuses 12 gegenüber dem Absperrkörper 24 ist am Übergang vom Innenkanal-Abschnitt 30 zum Absperrkörper 24 sowie am Übergang vom Innenkanal-Abschnitt 32 zum Absperrkörper 24 jeweils ein ringförmiges Dichtungselement 50, 52 zwischen dem Ventilgehäuse 12 und dem Absperrkörper 24 angeordnet, das den Absperrkörper 24 in Position hält und in der geöffneten Stellung (Fig. 1a-b) sowie in der geschlossenen Stellung (Fig. 2a-b) das Ventilgehäuse 12 zum Absperrkörper 24 und damit den Innenkanal 22 in Umfangsrichtung abdichtet. Insbesondere dichten die Dichtungselemente 50, 52 den Innenkanal 22 in der geöffneten und in der geschlossenen Stellung derart ab, dass durch den Innenkanal 22 geleitetes Fluid daran gehindert wird, in den Spalt 54 zwischen Ventilgehäuse 12 und Absperrkörper 24 zu gelangen. Auf diese Weise wird insbesondere in der geschlossenen Stellung verhindert, dass Fluid durch den Spalt 54 um den Absperrkörper 24 herum fließt.

Zur Positionierung des Dichtungselements 50, 52 weist das Ventilgehäuse 12 eine jeweilige ringförmige Aufnahme 56, 58 auf, in der das jeweilige Dichtungselement 50, 52 angeordnet ist.

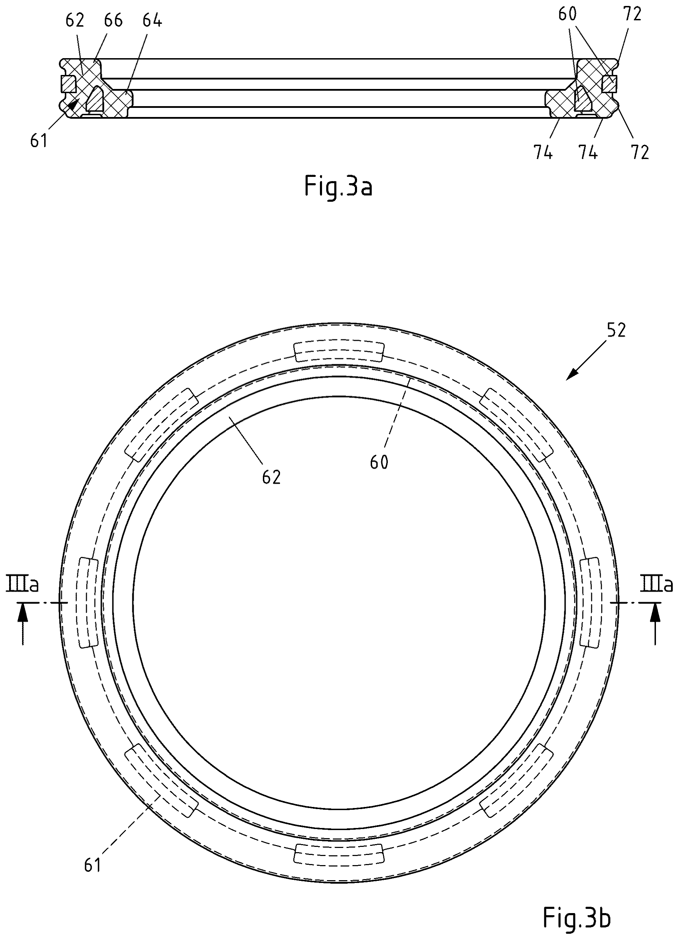

Die Fig. 1b und 2b zeigen den Querschnitt des ringförmigen Dichtungselements 52 in vergrößerter Schnittansicht. Weiterhin zeigen die Fig. 3a-b das Dichtungselement 52 isoliert (im unverformten Zustand), wobei Fig. 3a eine Schnittansicht entsprechend der in Fig. 3b mit "IIIa" bezeichneten Schnittebene zeigt. Der Trägerkörper 60 ist in Fig. 3b gestrichelt eingezeichnet.

Das Dichtungselement 52 weist einen ringförmigen Trägerkörper 60 und einen ringförmigen Dichtkörper 62 auf. Die Querschnitte von Trägerkörper 60 und Dichtkörper 62 sind in Fig. 3a zu sehen; in Fig. 3b ist der Trägerkörper 60 gestrichelt eingezeichnet.

Der Trägerkörper 60 ist aus einem ersten Material und der Dichtkörper 62 aus einem zweiten Material, wobei das erste Material ein höheres Elastizitätsmodul aufweist als das zweite Material. Auf diese Weise ist der Trägerkörper 60 steifer und gewährleistet, dass das Dichtungselement 50 bei mechanischer Belastung, zum Beispiel beim Verstellen des Absperrkörpers 24 oder durch den Druck eines durch den Innenkanal 22 strömenden Fluids, sicher an der vorgesehenen Position in der Aufnahme 58 bleibt. Weiterhin ist der Dichtkörper 62 durch das gegenüber dem Trägerkörper 60 geringere Elastizitätsmodul weniger steif und daher besser zur Abdichtung gegenüber dem Absperrkörper 24 und dem Ventilgehäuse 12 geeignet.

Der Trägerkörper 60 kann beispielsweise aus faserverstärktem PPA- oder PPS-Kunststoff bestehen und der Dichtkörper 62 aus einem synthetischen Kautschuk, beispielsweise EPDM.

Das Dichtungselement 52 ist vorliegend durch Mehrkomponenten-Spritzgießen hergestellt, wobei der elastische Dichtkörper 62 an den Trägerkörper 60 angespritzt wird, so dass Dichtkörper 62 und Trägerkörper 60 stoffschlüssig verbunden sind. Zudem weist der Trägerkörper 60 in Umfangsrichtung mehrere Öffnungen 61 auf, durch die sich das Material des Dichtkörpers 62 erstreckt, so dass Dichtkörper 62 und Trägerkörper 60 vorliegend auch formschlüssig miteinander verbunden sind.

Der Dichtkörper 62 weist auf der dem Absperrkörper 24 zugewandten Seite des Dichtungselements 52 eine erste Dichtlippe 64 und eine zweite Dichtlippe 66 auf.

Die erste Dichtlippe 64 ist so ausgebildet und angeordnet, dass sie sich in der geöffneten Stellung des Ventils 10 in einem Ausgangszustand befindet, in dem sie einen Abstand zum Absperrkörper 24 aufweist (s. Fig. 1b), und sich in der geschlossenen Stellung des Ventils 10 in einem gegenüber dem Ausgangszustand verformten Zustand befindet, in dem die erste Dichtlippe 64 unter Vorspannung am Absperrkörper 24 anliegt und dadurch komprimiert und somit verformt wird.

Die zweite Dichtlippe 66 ist so ausgebildet und angeordnet, dass sie in jeder Drehstellung des Absperrkörpers 24 unter Vorspannung am Absperrkörper 24 anliegt.

Die zweite Dichtlippe 66 bewirkt eine grundsätzliche Abdichtung sowohl in der geschlossenen Stellung (Fig. 2a-b) als auch in der geöffneten Stellung des Ventils 10 (Fig. 1a-b) sowie in etwaigen Zwischenstellungen. Weiterhin hält die zweite Dichtlippe 66 den Absperrkörper 24 in der geöffneten Stellung, der geschlossenen Stellung und in den Zwischenstellungen in Position. Allerdings kann die dauerhafte Verformung der zweiten Dichtlippe 66 dazu führen, dass die Dichtigkeit an dieser Stelle, insbesondere bei einem Verstellen des Absperrkörpers 24, reduziert wird. Da die erste Dichtlippe 64 erst beim Verstellen von der geöffneten in die geschlossene Stellung verformt wird, übt die erste Dichtlippe 64 in der geschlossenen Stellung eine der Komprimierung der Dichtlippe 64 entgegenwirkende Kraft gegen die Oberfläche des den Absperrkörpers 24 aus, so dass auf diese Weise eine gute Abdichtung zwischen dem Dichtungselement 52 und dem Absperrkörper 24 erreicht wird. Auf diese Weise kann insbesondere verhindert werden, dass in der geschlossenen Stellung Fluid über den Spalt 54 um den Absperrkörper 24 herum fließen kann.

Die erste Dichtlippe 64 ist so geformt und zum Absperrkörper 24 angeordnet, dass sie im verformten Zustand bei Anlage an den Absperrkörper 24 in der geschlossenen Stellung gegenüber des Dichtsitzes 68 der ersten Dichtlippe 64 mit dem Absperrkörper 24 zum Innenkanal 22 einen konkaven Bereich 65 bildet. Der Druck des im Betrieb im Innenkanal 22 vorhandenen Fluids, insbesondere Wassers, bewirkt auf diese Weise im konkaven Bereich 65 eine Andrückkraft auf die Dichtlippe 64, so dass diese stärker gegen den Absperrkörper 24 gedrückt wird und dadurch besser zu diesem abdichtet. Die Andrückkraft steigt mit steigendem Druck innerhalb des Innenkanals 22, so dass auch bei hohen Drücken im Innenkanal 22 eine zuverlässige Abdichtung gewährleistet wird.

Auf der den Dichtlippen 64, 66 gegenüberliegenden und dem Ventilgehäuse 12 zugewandten Seite des Dichtungselements 52 weist der Dichtkörper 62 radiale Dichtflächen 72 und axiale Dichtflächen 74 auf, die unter Vorspannung an jeweiligen Gegenflächen 76, 78 des Ventilgehäuses 12 anliegen und das Dichtungselement 52 zum Ventilgehäuse 12 abdichten. Die Gegenflächen 76, 78 stellen für die Anlage der Dichtlippen 64, 66 am Absperrkörper 24 gleichzeitig ein Gegenlager dar.

Da Trägerkörper 60 und Dichtkörper 62 verschiedene Funktionen haben, können für die jeweiligen Funktionen geeignete Materialien verwendet werden. Weiterhin können durch das Vorsehen der ersten Dichtlippe 64 auch Materialien für den Dichtkörper 62 verwendet werden, die ggf. stärker zu einer bleibenden Verformung neigen. Auf diese Weise kann das Material für den Dichtkörper 62 und den Trägerkörper 60 aus einer breiteren Materialpalette ausgewählt werden.

Vorzugsweise wird für den Trägerkörper 60 und den Dichtkörper 62 jeweils ein PFAS-freies Material ausgewählt. Bei dem ersten und/oder dem zweiten Material handelt es sich demnach vorzugsweise jeweils um ein PFAS-freies Material.

Das Dichtungselement 50 weist einen zum Dichtungselement 52 identischen Aufbau auf und ist lediglich, entsprechend seiner Anordnung auf der gegenüberliegenden Seite des Absperrkörpers 24, um 180° um die Achse 26 gedreht.

Durch die Dichtungselemente 50 und 52 wird erreicht, dass das Ventil 10 auch nach langer Stehzeit in geöffneter Stellung (s. Fig. 1a-b) ein beschädigungsfreies Verstellen in die geschlossene Stellung (s. Fig. 2a-b) ermöglicht und dort zuverlässig abgedichtet ist. Weiter wird durch die Verwendung PFAS-freier Materialien das Gesundheitsrisiko gesenkt, so dass sich das Ventil 10 insbesondere zur Verwendung in Trinkwasserinstallationen eignet.

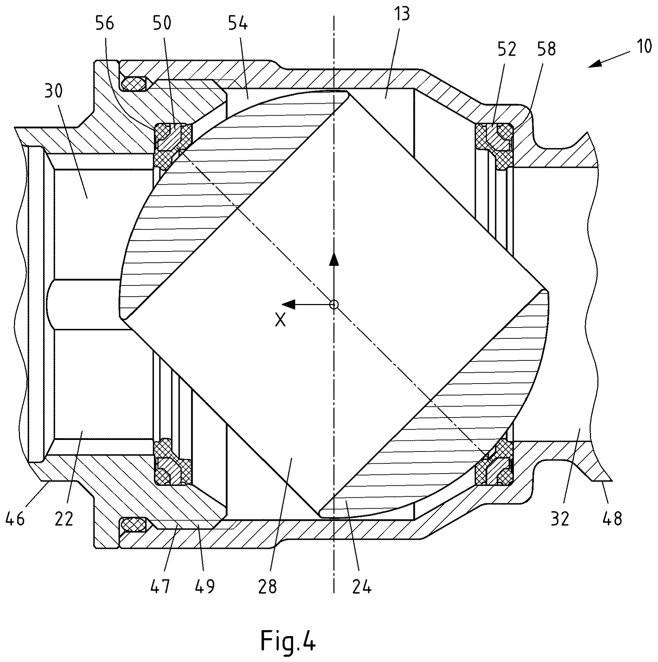

Fig. 4 zeigt, in Schnittansicht entsprechend der in Fig. 2b mit "IV" bezeichneten Schnittebene, das Ventil 10 in einer Zwischenstellung zwischen der geöffneten und der geschlossenen Stellung. Anders als in Fig. 2a-b ist der Absperrkörper 24 in Fig. 4 nicht um 90°, sondern lediglich um ca. 45° gegenüber Fig. 1a-b gedreht. Das Ventilgehäuse 12, der Absperrkörper 24 und die Dichtungselemente 50, 52 sind derart ausgestaltet und angeordnet, dass der Innenkanal 22 in der Zwischenstellung mit dem Spalt 54 in Fluidverbindung steht, im vorliegenden Ausführungsbeispiel über einen Bereich 13 im Ventilgehäuse 12 zwischen den Dichtungselementen 50, 52 und quer zum Innenkanal 22. Auf diese Weise wird der Spalt 54 beim Verstellen des Absperrkörpers 24 zwischen geöffneter und geschlossener Stellung mit durch den Innenkanal 22 strömendem Fluid durchströmt, so dass darin enthaltenes Fluid ausgetauscht wird und ein permanent stagnierendes Fluidvolumen vermieden werden kann.

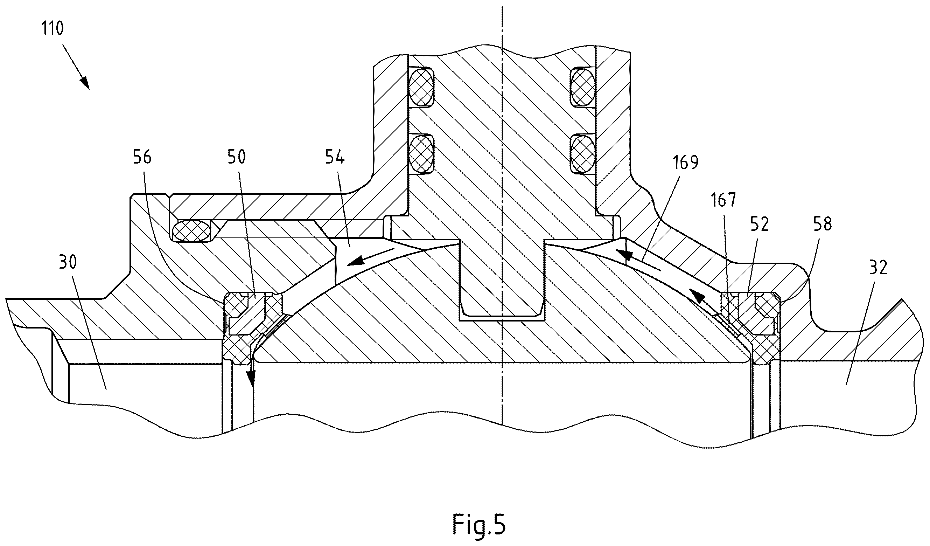

Fig. 5 zeigt einen Ausschnitt eines weiteren Ausführungsbeispiels des Ventils in Schnittansicht. Das Ventil 110 weist grundsätzlich denselben Aufbau und dieselbe Funktionsweise auf wie das Ventil 110. Einander entsprechende Komponenten sind in Fig. 5 mit denselben Bezugszeichen versehen wie beim Ventil 10 und es wird auf die obige Beschreibung des Ventils 10 verwiesen.

Das Ventil 110 unterscheidet sich lediglich dadurch vom Ventil 10, dass im Bereich der jeweiligen zweiten Dichtlippe 66 der Dichtungselemente 50, 52 Öffnungen 167 vorgesehen sind, beispielsweise in Form von Kanälen oder einer Perforation, die einen Bypass zur zweiten Dichtlippe 66 bilden. Auf diese Weise wird in der geöffneten Stellung, wenn die jeweilige erste Dichtlippe 64 nicht am Absperrkörper 24 anliegt, auf Seiten beider Dichtungselemente 50, 52 durch die Öffnungen 167 eine jeweilige Fluidverbindung zwischen dem Innenkanal 22 und dem Spalt 54 bewirkt, so dass der Spalt 54 von dem durch den Innenkanal 22 geleiteten Fluid durchströmt wird (Pfeil 169). Auf diese Weise kann stagnierendes Fluid, insbesondere Wasser, im Spalt 54 in der geöffneten Stellung vermieden werden. Die zweite Dichtlippe 66 hat in diesem Fall keine abdichtende Funktion, sondern hält lediglich den Absperrkörper 24 in Position.

### Bezugszeichenliste:

- 10,110: Ventil
- 12: Ventilgehäuse
- 13: Bereich im Ventilgehäuse
- 14, 16: Anschlussstutzen
- 18, 20: Öffnung
- 22: Innenkanal
- 24: Absperrkörper
- 26: Drehachse
- 28: Absperrkörper-Innenkanal
- 30: Abschnitte des Innenkanals
- 34: Betätigungselement
- 36: Welle
- 38: Hebel
- 40: Pressinnenkontur
- 42: Nut
- 44: Dichtungselement
- 46, 48: Gehäuseteil
- 47, 49: Gewinde
- 50, 52: Dichtungselement
- 54: Spalt
- 56, 58: ringförmige Aufnahme
- 60: Trägerkörper
- 61: Öffnungen im Trägerkörper
- 62: Dichtkörper
- 64, 66: Dichtlippe
- 65: konkaver Bereich
- 68: Dichtsitz
- 72, 74: Dichtfläche
- 76, 78: Gegenfläche
- 167: Öffnungen im Dichtkörper
- 169: Pfeil (Fluidstrom)

## Patentansprüche

1. Ventil (10, 110), insbesondere Kugelventil,
- mit einem Ventilgehäuse (12), das mindestens eine erste Öffnung (18) und eine zweite Öffnung (20) aufweist, zwischen denen ein Innenkanal (22) verläuft, und
- mit einem im Ventilgehäuse (12) angeordneten Absperrkörper (24), der zum Regulieren, insbesondere zum Absperren oder Durchlassen, eines Fluidflusses durch den Innenkanal (22) verstellbar ist,
- wobei zwischen dem Ventilgehäuse (12) und dem Absperrkörper (24) ein Dichtungselement (50, 52) angeordnet ist,
**dadurch gekennzeichnet,**
- **dass** das Dichtungselement (50, 52) eine elastische Dichtlippe (64) aufweist, wobei die elastische Dichtlippe (64) und der Absperrkörper (24) so ausgebildet und zueinander angeordnet sind, dass sich die elastische Dichtlippe (64) in einem Ausgangszustand befindet, wenn sich der Absperrkörper (24) in einer ersten Stellung, insbesondere in einer ersten Zielstellung des Ventils (10, 110), befindet, und dass sich die elastische Dichtlippe (64) in einem gegenüber dem Ausgangszustand verformten Zustand befindet, wenn sich der Absperrkörper (24) in einer zweiten Stellung, insbesondere in einer zweiten Zielstellung des Ventils (10, 110), befindet.

2. Ventil nach Anspruch 1,
**dadurch gekennzeichnet, dass** die elastische Dichtlippe (64) in dem verformten Zustand, insbesondere unter Vorspannung, am Absperrkörper (24) oder am Ventilgehäuse (12) anliegt.

3. Ventil nach Anspruch 1 oder 2,
**dadurch gekennzeichnet, dass** das Dichtungselement (50, 52) eine weitere elastische Dichtlippe (66) aufweist, wobei die weitere elastische Dichtlippe (66) und der Absperrkörper (24) so ausgebildet und zueinander angeordnet sind, dass die weitere elastische Dichtlippe (66), vorzugsweise unter Vorspannung, am Absperrkörper (24) oder am Ventilgehäuse (12) anliegt, wenn sich der Absperrkörper (24) in der ersten Stellung befindet.

4. Ventil nach Anspruch 3,
**dadurch gekennzeichnet, dass** das Dichtungselement (50, 52) ein oder mehrere Öffnungen (167) als Bypass für die weitere elastische Dichtlippe (66) aufweist.

5. Ventil nach einem der Ansprüche 1 bis 4,
**dadurch gekennzeichnet, dass** der Absperrkörper (24) drehbar im Ventilgehäuse (12) gelagert ist, insbesondere um eine Drehachse (26), wobei der Absperrkörper (24) vorzugsweise einen Absperrkörper-Innenkanal (28) aufweist.

6. Ventil nach einem der Ansprüche 1 bis 5,
**dadurch gekennzeichnet, dass** Dichtungselement (50, 52) ringförmig ist.

7. Ventil nach einem der Ansprüche 1 bis 6,
**dadurch gekennzeichnet, dass** das Dichtungselement (50, 52) einen Trägerkörper (60) aus einem ersten Material und einen Dichtkörper (62) aus einem zweiten Material aufweist, wobei das zweite Material ein geringeres Elastizitätsmodul aufweist als das erste Material, wobei der Dichtkörper (62) vorzugsweise die Dichtlippe (64) und/oder die weitere Dichtlippe (66) bildet.

8. Ventil nach einem der Ansprüche 1 bis 7,
**dadurch gekennzeichnet, dass** das Dichtungselement (50, 52) PFAS-frei ist.

9. Ventil nach einem der Ansprüche 1 bis 8,
**dadurch gekennzeichnet, dass** das Dichtungselement (50, 52) ein oder mehrere der Dichtlippe (64) und/oder der weiteren Dichtlippe (66) gegenüberliegende Dichtflächen (72, 74) aufweist, die am Ventilgehäuse (12) oder am Absperrkörper (24) anliegen.

10. Ventil nach einem der Ansprüche 1 bis 9,
**dadurch gekennzeichnet, dass** zwischen dem Ventilgehäuse (12) und dem Absperrkörper (24) ein weiteres Dichtungselement (52, 50) angeordnet ist, wobei eines von dem Dichtungselement (50, 52) und dem weiteren Dichtungselement (52, 50) zwischen dem Absperrkörper (24) und einem der ersten Öffnung (18) zugewandten Teil des Ventilgehäuses (12) und das andere von dem Dichtungselement (50, 52) und dem weiteren Dichtungselement (52, 50) zwischen dem Absperrkörper (24) und einem der zweiten Öffnung (20) zugewandten Teil des Ventilgehäuses (12) angeordnet ist.

11. Ventil nach einem der Ansprüche 1 bis 10,
**dadurch gekennzeichnet, dass** das Ventilgehäuse (12) einen ersten Anschlussstutzen (14) mit der ersten Öffnung (18) und einen zweiten Anschlussstutzen (16) mit der zweiten Öffnung (20) aufweist.

12. Ventil nach einem der Ansprüche 1 bis 11,
**dadurch gekennzeichnet, dass** ein Betätigungselement (34) zum Verstellen des Absperrkörpers (24) vorgesehen ist.

13. Verwendung eines Ventils (10, 110) nach einem der Ansprüche 1 bis 12 für eine Gasinstallation oder Trinkwasserinstallation.
